# FASCICULE DE BREVET EUROPEEN

(11) **EP 0 801 617 B1**
(45) Date de publication et mention de la délivrance du brevet: **16.06.1999**
(21) Numéro de dépôt: 96937387.7
(22) Date de dépôt: 04.11.1996
(51) Int. Cl.: B62J 23/00, B60R 9/10, B65D 85/68

(54) **DISPOSITIF DE PROTECTION DE CYCLES FIXES SUR UN ATTELAGE ARRIERE POUR VEHICULES**
SCHUTZVORRICHTUNG FÜR FAHRRÄDER AUF EINEM FAHRRADTRÄGER FÜR EIN FAHRZEUG
DEVICE FOR PROTECTING CYCLES ON A TRAILER BEHIND A VEHICLE

(30) Priorité: 14.11.1995 FR 9513452
(43) Date de publication de la demande: 22.10.1997
(73) Titulaire: Fradin, Philippe, 95120 Ermont (FR)
(72) Inventeur: Fradin, Philippe, 95120 Ermont (FR)
(74) Mandataire: Poulin, Gérard
(86) Numéro de dépôt international: FR9601727
(87) Numéro de publication internationale: WO9718121

(56) Documents cités:
- EP-A- 0 439 155
- US-A- 4 378 883
- US-A- 4 991 715
- US-A- 5 282 555

## Description

### Domaine de l'invention

La présente invention a pour objet un dispositif de protection des cycles associé à une structure d'attelage fixée sur véhicules et notamment véhicules automobiles.

L'invention se rattache au secteur technique des appareils, structures, supports de bicyclettes et produits similaires du même type qui peuvent être transportés par des véhicules.

### Art antérieur et problème posé

Selon les pratiques actuelles, on utilise des attelages pour un ou plusieurs cycles (Voir US-A-5 282 555), tels que des V. T. T. (véhicules tous terrains), ou bicyclettes fixées à l'extérieur de l'arrière de véhicules avec une malle arrière ou avec un hayon. Les cycles ainsi disposés sont en contact direct entre eux, ce qui a pour conséquences :
- de détériorer le cadre de chaque cycle ;
   et
- de détériorer les équipements, notamment ceux de sécurité.

### Résumé de l'invention

Le dispositif selon l'invention permet de remédier à ces inconvénients en proposant une solution fiable, simple et peu coûteuse. Il vient prendre position entre les cycles, par l'intermédiaire des broches de l'attelage, avec l'option de le positionner entre l'attelage et le premier cycle, pour protéger ces derniers lors du transport et assurer la stabilité et la signalisation de l'attelage.

A cet effet, l'objet principal de l'invention est un dispositif de protection de cycles, associé à une structure d'attelage pourvue de broches et fixée un véhicule. Le dispositif se caractérise en ce qu'il est constitué d'une plaque intercalaire en matière amortissante et qui comporte au moins un évidement permettant sa fixation en engageant celui-ci autour des broches de l'attelage, entre les cycles transportés, ainsi qu'entre le premier cycle et l'attelage, côté véhicule.

Les différentes caractéristiques de réalisation et les options sont décrites dans les sous-revendications.

### Description détaillée d'une réalisation de l'invention

D'autres caractéristiques ou avantages de l'invention seront mieux compris à la lecture de la description détaillée qui suit, illustrée par les dessins annexés :
- la figure 1 représente le dispositif selon l'invention en position d'utilisation ; et
- la figure 2 représente une section partielle du dispositif selon l'invention.

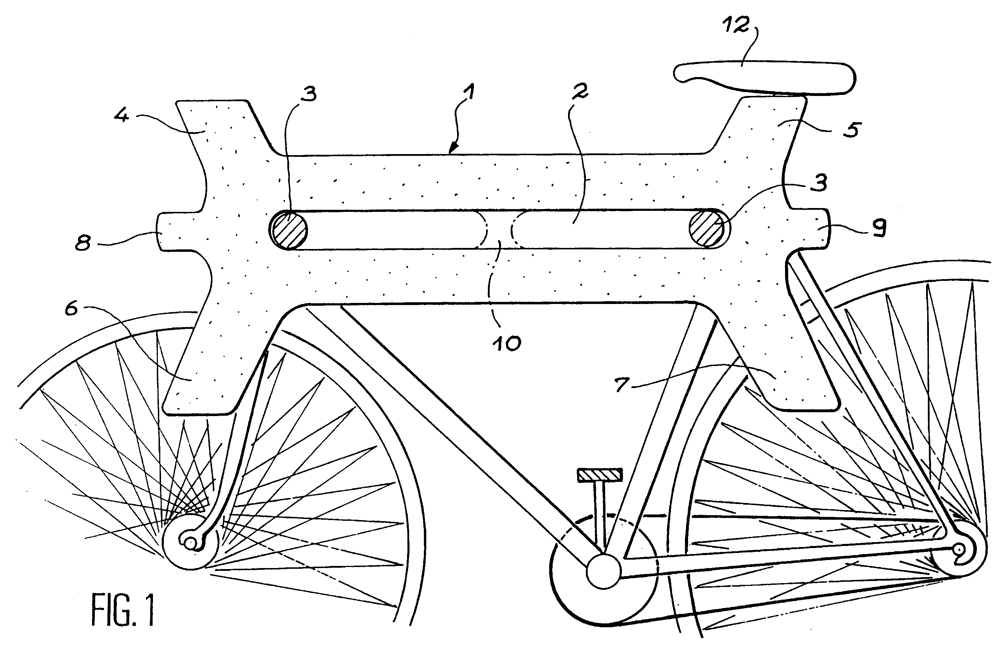

La figure 1 montre le dispositif selon l'invention installé sur les deux fourches 3 d'un attelage de fixation de cycles sur l'arrière d'une automobile. On distingue également une bicyclette placée en dessous le dispositif.

Celui-ci est constitué principalement d'une plaque intercalaire 1 en matière amortissante possédant au moins un évidement central 2. Les traits fins placés au milieu de l'évidement 2 schématisent le partage éventuel de cet évidement 2 en deux parties pour pouvoir ménager un renfort central 10 améliorant la rigidité du dispositif.

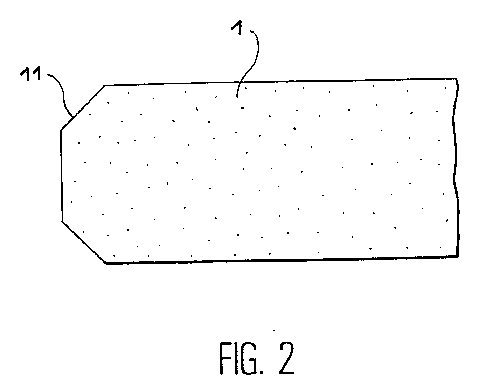

En se référant simultanément à la figure 2, on comprend que, si le dispositif selon l'invention, c'est-à-dire la plaque intercalaire 1, a une épaisseur d'environ 40 cm, il constitue une entretoise écartant légèrement la bicyclette représentée sur la figure 1 de la bicyclette suivante à empiler sur l'attelage.

En revenant à la figure 1, on constate la présence d'une extension latérale gauche 4 et d'une extension latérale droite 5 sur la partie supérieure de la plaque intercalaire 1. Ces deux extensions latérales 4 et 5 ont pour effet d'améliorer la protection de la selle 12, et de certaines parties du guidon non représentées et, plus généralement, de l'ensemble des parties hautes du ou des cycles ainsi transportés.

De même, une extension latérale gauche 6 et une extension latérale droite 7 sont prévues sur la partie inférieure du dispositif. Elles ont pour effet d'améliorer la protection des freins et des fourches et, de manière générale, de l'ensemble des parties basses du ou des cycles ainsi transportés.

On peut également remarquer la présence d'une extension gauche distale 8 et d'une extension droite distale 9 positionnées de manière centrale, au niveau de l'évidement central 2. Elles ont pour effet d'améliorer la protection des parties médianes du ou des cycles transportés.

On remarque la forme relativement effilée de la plaque intercalaire 1 qui permet de réduire la résistance au vent de l'ensemble attelé.

La largeur et la longueur du ou des évidements 2 dépendent principalement de la position plus ou moins standardisée des broches 3 de l'attelage de fixation. On comprend que cette position peut être facilement modifiée en fonction de l'évolution de la position de ces broches d'attelage.

Une des matières employées pour réaliser la plaque intercalaire selon l'invention est un matériau semi-rigide, tel que le polyéthylène à double densité. On peut ainsi utiliser un polyéthylène ayant un poids volumique central de 40 kg/m³ et un poids volumique superficiel de 100 kg/m³. Le polyuréthanne peut également être utilisé.

Dans le but de rendre le système voyant, c'est-à-dire susceptible de constituer un élément signalisant de l'attelage pour les véhicules suiveurs de l'automobile sur laquelle est utilisé le dispositif selon l'invention, ce dernier peut être de couleur vive. On peut réaliser facilement la croûte superficielle de la plaque intercalaire 1 en rouge ou jaune vif.

A titre d'exemple non limitatif, on signale que la plaque intercalaire 1 peut avoir une longueur de 90 cm, une hauteur de 45 cm et une épaisseur de 4 cm.

Outre le fait que le dispositif selon l'invention évite de détériorer les cycles positionnés les uns sur les autres, et à l'attelage susceptible de subir les chocs des cycles, il faut remarquer que sa mise en place est relativement rapide et simple par rapport à la mise en place compliquée de matériaux divers plus ou moins adaptés, afin d'arriver au même but.

## Revendications

1. Dispositif de protection des cycles associé à une structure d'attelage pourvue de broches (3) fixée sur véhicules, caractérisé en ce qu'il est constitué d'une plaque intercalaire (1) en matière amortissante et qui comporte au moins un évidement (2) permettant une fixation en engageant cet évidement autour des broches (3) de l'attelage, entre les cycles transportés, ainsi qu'entre le premier cycle et l'attelage, côté véhicule.

2. Dispositif selon la revendication 1, caractérisé en ce qu'il est réalisé en mousse semi-rigide à cellules fermées présentant une épaisseur d'au moins 40 millimètres.

3. Dispositif selon la revendication 1, caractérisé en ce que l'évidement (2) est longitudinal, ayant ainsi peu de prise au vent.

4. Dispositif selon la revendication 1, caractérisé par des extensions latérales aux extrémités (4, 5) sur sa partie inférieure et qui ont pour effet d'améliorer la protection de l'ensemble des parties hautes du ou des cycles transportés.

5. Dispositif selon la revendication 1, caractérisé par une extension (6, 7) sur sa partie inférieure et qui ont pour effet d'améliorer la protection de l'ensemble des parties latérales.

6. Dispositif selon la revendication 1, caractérisé par des extensions distales (8, 9) positionnées au niveau de l'évidement central (2) et qui ont pour effet d'améliorer la protection des parties médianes du ou des cycles transportés.

7. Dispositif selon la revendication 1, caractérisé en ce que la matière amortissante constituant la plaque intercalaire (1) est du polyéthylène à double densité, avec une densité supérieure en surface par rapport au centre de la plaque intercalaire (1).

8. Dispositif selon la revendication 1, caractérisé en ce qu'il est pourvu de moyens de signalisation réfléchissante ou fluorescente.

9. Dispositif selon la revendication 8, caractérisé en ce que le matériau constituant la matière amortissante est un polyéthylène à double densité, avec une densité supérieure en surface, la croûte superficielle étant une croûte colorée de couleur vive.

## Claims

1. A device for protecting cycles linked to a harnessing structure provided with pins (3) fixed onto vehicles, characterised in that it is made up of a spacer slab (1) made of shock absorbing material and which includes at least one hollow (2) that allows attachment by engaging this hollow around pins (3) of the harness, between the transported cycles, and between the first cycle and the harness on the vehicle side.

2. A device according to Claim 1, characterised in that it is produced in a semi-rigid foam with closed cells having a thickness of at least 40 millimetres.

3. A device according to Claim 1, characterised in that the hollow (2) is longitudinal thereby having little wind resistance.

4. A device according to Claim 1, characterised by lateral extensions to the extremities (4, 5) on its lower part, which have the effect of improving the protection of the whole of the upper parts of the transported cycle or cycles.

5. A device according to Claim 1, characterised by an extension (6, 7) on its lower part which has the erect of improving the protection of the whole of the lateral parts.

6. A device according to Claim 1, characrerised by distal extensions (8, 9) positioned at the central hollow (2) which have the effect of improving the protection of the middle parts of the transported cycle or cycles.

7. A device according to Claim 1, characterised in that the shock absorbing material forming the spacer slab (1) is double density polyethylene with a greater density at the surface compared with at the centre of the spacer slab (1).

8. A device according to Claim 1, characterised in that it is provided with reflective or fluorescent indication means.

9. A device according to Claim 8, characterised in that the material constituting the shock absorbing material is double density polyethylene with a greater density at the surface, the surface crust being a crust coloured in a bright colour.

## Patentansprüche

1. Schutzvorrichtung für Fahrräder bzw. Zweiräder, verbunden mit einer mit Stäben (3) versehenen, auf dem Fahrzeug befestigten Fahrradträgerstruktur,
**dadurch gekennzeichnet**,
daß sie durch eine Zwischenplatte (1) aus dämpfendem Material gebildet wird, die wenigstens eine Aussparung (2) umfaßt, die eine Befestigung ermöglicht, indem man diese Aussparung auf zwei Stäbe (3) des Fahrradträgers steckt, zwischen die transportierten Fahrräder, sowie zwischen das erste Fahrrad und den Fahrradträger, auf der Fahrzeugseite.

2. Vorrichtung nach Anspruch 1, dadurch gekennzeichnet, daß sie durch halbsteifen Schaum mit geschlossenen Zellen gebildet wird, mit einer Dicke von wenigstens 40 Millimetern.

3. Vorrichtung nach Anspruch 1, dadurch gekennzeichnet, daß die Aussparung (2) longitudinal ist und somit wenig Luft- bzw. Windwiderstand hat.

4. Vorrichtung nach Anspruch 1, gekennzeichnet durch seitliche Ausbreitungen an den Enden (4, 5) ihres Oberteils, die den Zweck haben, den Schutz aller oberen Teile des zu transportierenden Fahrrads oder der Fahrräder zu verbessern.

5. Vorrichtung nach Anspruch 1, gekennzeichnet durch eine Ausbreitung (6, 7) ihres Unterteils, die den Zweck haben, den Schutz aller seitlichen Teile zu verbessern.

6. Vorrichtung nach Anspruch 1, gekennzeichnet durch Längsausbreitungen (8, 9), die sich in Höhe der zentralen Aussparung (2) befinden und die den Zweck haben, den Schutz der mittleren Teile des zu transportierenden Fahrrads oder der Fahrräder zu verbessern.

7. Vorrichtung nach Anspruch 1, dadurch gekennzeichnet, daß das die Zwischenplatte (1) bildende Material Polyethylen doppelter Dichte ist, mit einer höheren Dichte an der Oberfläche in bezug auf die Mitte bzw. den Kern der Zwischenplatte (1).

8. Vorrichtung nach Anspruch 1, dadurch gekennzeichnet, daß reflektierende oder fluoreszierende Signalisationsmittel bzw. -einrichtungen vorgesehen sind.

9. Vorrichtung nach Anspruch 8, dadurch gekennzeichnet, daß der das dämpfende Material bildende Stoff ein Polyethylen doppelter Dichte ist, mit einer höheren Dichte an der Oberfläche, wobei die Oberflächenhaut eine Haut mit einer hellen bzw. leuchtenden Farbe ist.
